# EUROPEAN PATENT APPLICATION

(11) **EP 3 739 847 A1**
(43) Date of publication of application: **18.11.2020**
(21) Application number: 20156530.6
(22) Date of filing: 20.06.2016
(51) Int. Cl.: H04L 29/08, H04L 12/24

(54) **APPLICATION IMPLEMENTATION METHOD AND SERVICE CONTROLLER**

(30) Priority: 29.06.2015 CN 201510367147
(62) Divisional of application: 16817167.6
(71) Applicant: Huawei Technologies Co. Ltd., Guangdong 518129 (CN)
(72) Inventor: CHENG, Kang, Shenzhen, Guangdong 518129 (CN); YU, Wenxiao, Shenzhen, Guangdong 518129 (CN); WU, Xingfen, Shenzhen, Guangdong 518129 (CN); HU, Yinliang, Shenzhen, Guangdong 518129 (CN)
(74) Representative: Goddar, Heinz J.

(57) **Abstract**

Embodiments of the present invention disclose an application implementation method and a service controller, so as to facilitate application development and improve application implementation efficiency. The method in the embodiments of the present invention includes: receiving, by the service controller, description information of a first application, where the description information is sent by an application server; determining, by the service controller, target network resource information according to the description information, where the target network resource information is used to indicate a network resource required by the first application; and sending, by the service controller to a network controller, an invoking instruction that carries a network policy, where the invoking instruction is used to instruct the network controller to invoke the target network resource according to the network policy to implement the first application.

## Description

This application claims priority to Chinese Patent Application No. 201510367147.9, filed with the Chinese Patent Office on June 29, 2015 and entitled "APPLICATION IMPLEMENTATION METHOD AND SERVICE CONTROLLER", which is incorporated herein by reference in its entity.

### TECHNICAL FIELD

The present invention relates to the field of communications technologies, and in particular, to an application implementation method and a service controller.

### BACKGROUND

In a software-defined networking (English: software-defined networking, SDN for short) ecosystem, a northbound interface is an important concept.

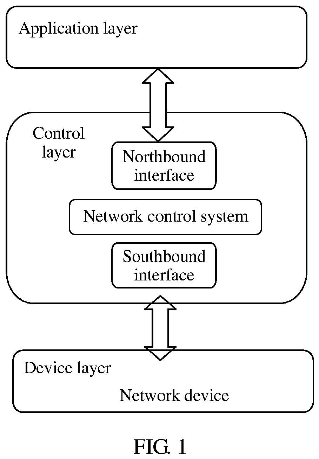

As shown in FIG. 1, in the prior art, an SDN network architecture diagram generally includes a device layer, a control layer, and an application layer. The application layer communicates with the control layer by using a northbound interface, and the control layer communicates with the device layer by using a southbound interface. A developer obtains a network resource of a network device at the device layer from a network control system by using the northbound interface, and provides the network resource for the application layer. An application developer may develop an application based on the network resource at the application layer, match the developed application with the network resource, and then invoke the network resource by using the northbound interface to implement the application.

However, in the prior art, due to different levels of network technology knowledge and skills of application developers, a developed application may probably not match a network resource. The application developer needs to develop an application with reference to network resource information, and application development becomes more difficult. In addition, a network policy needs to be manually sent to a network controller, and application implementation efficiency is affected.

### SUMMARY

Embodiments of the present invention provide an application implementation method and a service controller, so as to facilitate application development and improve application implementation efficiency.

A first aspect of the embodiments of the present invention provides an application implementation method, including:
receiving, by a service controller, description information of a first application by using a northbound interface, where the description information is sent by an application server;
determining, by the service controller, target network resource information according to the description information, where the target network resource information is used to indicate a target network resource required for implementing the first application; and
sending, by the service controller to a network controller, an invoking instruction that carries a network policy, where the invoking instruction is used to instruct the network controller to invoke the target network resource according to the network policy to implement the first application.

With reference to the first aspect of the embodiments of the present invention, in a first implementation of the first aspect of the embodiments of the present invention, the sending, by the service controller to a network controller, an invoking instruction that carries a network policy includes:
when determining that the target network resource indicated by the target network resource information is currently in an idle state, sending, by the service controller to the network controller, the invoking instruction that carries the network policy.

With reference to the first implementation of the first aspect of the embodiments of the present invention, in a second implementation of the first aspect of the embodiments of the present invention, the determining, by the service controller, that the target network resource is currently in an idle state includes:
determining, by the service controller, that network resource information in a network resource information base includes the target network resource information, where the network resource information is used to indicate an idle network resource of a network device.

With reference to the second implementation of the first aspect of the embodiments of the present invention, in a third implementation of the first aspect of the embodiments of the present invention, before the determining, by the service controller, that the target network resource is currently in an idle state, the method further includes:
obtaining, by the service controller, the network resource information from the network controller, where the network resource information is used to indicate the idle network resource of the network device; and
storing, by the service controller, the network resource information into the network resource information base.

With reference to the first implementation of the first aspect of the embodiments of the present invention, in a fourth implementation of the first aspect of the embodiments of the present invention, the determining, by the service controller, that the target network resource indicated by the target network resource information is currently in an idle state includes:
searching, by the service controller, a network resource information base for a status identifier of the target network resource according to the target network resource information, and determining, according to the status identifier, that the target network resource is currently in the idle state.

With reference to the first aspect of the embodiments of the present invention, in a fifth implementation of the first aspect of the embodiments of the present invention, the sending, by the service controller to a network controller, an invoking instruction that carries a network policy includes:
when determining that the target network resource indicated by the target network resource information is currently in an occupied state, a priority of the first application is higher than a priority of a second application, and the second application occupies the target network resource, sending, by the service controller to the network controller, the invoking instruction that carries the network policy; and
that the invoking instruction is used to instruct the network controller to invoke the target network resource according to the network policy to implement the first application includes:
   the invoking instruction is used to instruct the network controller to, according to the network policy, release the occupied target network resource and invoke the target network resource to implement the first application.

With reference to the fifth implementation of the first aspect of the embodiments of the present invention, in a sixth implementation of the first aspect of the embodiments of the present invention, the determining, by the service controller, that the target network resource indicated by the target network resource information is currently in an occupied state includes:
determining, by the service controller, that network resource information in a network resource information base does not include the target network resource information, where the network resource information is used to indicate an idle network resource of a network device.

With reference to the sixth implementation of the first aspect of the embodiments of the present invention, in a seventh implementation of the first aspect of the embodiments of the present invention, before the determining, by the service controller, that the target network resource indicated by the target network resource information is currently in an occupied state, the method further includes:
obtaining, by the service controller, the network resource information from the network controller, where the network resource information is used to indicate the idle network resource of the network device; and
storing, by the service controller, the network resource information into the network resource information base.

With reference to the fifth implementation of the first aspect of the embodiments of the present invention, in an eighth implementation of the first aspect of the embodiments of the present invention, the determining, by the service controller, that the target network resource is currently in an occupied state includes:
searching, by the service controller, a network resource base for a status identifier of the target network resource according to the target network resource information, and determining, according to the status identifier, that the target network resource is currently in the occupied state.

With reference to the eighth implementation of the first aspect of the embodiments of the present invention, in a ninth implementation of the first aspect of the embodiments of the present invention, before the determining, by the service controller, that the target network resource indicated by the target network resource information is currently in an occupied state, the method further includes:
obtaining, by the service controller, the target network resource information and the status identifier of the target network resource; and
storing, by the service controller, the target network resource information and the status identifier of the target network resource into the network resource information base.

With reference to the first aspect of the embodiments of the present invention, the second implementation of the first aspect, the third implementation of the first aspect, the fourth implementation of the first aspect, the fifth implementation of the first aspect, the sixth implementation of the first aspect, the seventh implementation of the first aspect, the eighth implementation of the first aspect, or the ninth implementation of the first aspect, in a tenth implementation of the first aspect of the embodiments of the present invention, before the sending, by the service controller to a network controller, an invoking instruction that carries a network policy, the method further includes:
generating, by the service controller, the network policy; or
receiving, by the service controller by using the northbound interface, the network policy sent by a user terminal.

A second aspect of the embodiments of the present invention provides a service controller, including:
a northbound interface, configured to receive description information of a first application, where the description information is sent by an application server;
a determining unit, configured to determine target network resource information according to the description information, where the target network resource information is used to indicate a target network resource required for implementing the first application; and
a processing unit, configured to send, to a network controller, an invoking instruction that carries a network policy, where the invoking instruction is used to instruct the network controller to invoke the target network resource according to the network policy to implement the first application.

With reference to the second aspect of the embodiments of the present invention, in a first implementation of the second aspect of the embodiments of the present invention, the processing unit is specifically configured to: when determining that the target network resource indicated by the target network resource information is currently in an idle state, send, to the network controller, the invoking instruction that carries the network policy.

With reference to the first implementation of the second aspect of the embodiments of the present invention, in a second implementation of the second aspect of the embodiments of the present invention, the processing unit is specifically configured to determine that network resource information in a network resource information base includes the target network resource information, and the network resource information is used to indicate an idle network resource of a network device.

With reference to the second implementation of the second aspect of the embodiments of the present invention, in a third implementation of the second aspect of the embodiments of the present invention, the service controller further includes:
a first obtaining unit, configured to obtain the network resource information from the network controller, where the network resource information is used to indicate the idle network resource of the network device; and
a first storage unit, configured to store the network resource information into the network resource information base.

With reference to the first implementation of the second aspect of the embodiments of the present invention, in a fourth implementation of the second aspect of the embodiments of the present invention, the processing unit is specifically configured to: search a network resource information base for a status identifier of the target network resource according to the target network resource information, and determine, according to the status identifier, that the target network resource is currently in the idle state.

With reference to the second aspect of the embodiments of the present invention, in a fifth implementation of the second aspect of the embodiments of the present invention, the processing unit is specifically configured to:
when determining that the target network resource indicated by the target network resource information is currently in an occupied state, a priority of the first application is higher than a priority of a second application, and the second application occupies the target network resource, send, to the network controller, the invoking instruction that carries the network policy, where the invoking instruction is used to instruct the network controller to, according to the network policy, release the occupied target network resource and invoke the target network resource to implement the first application.

With reference to the fifth implementation of the second aspect of the embodiments of the present invention, in a sixth implementation of the second aspect of the embodiments of the present invention, the processing unit is specifically configured to determine that network resource information in a network resource information base does not include the target network resource information, and the network resource information is used to indicate an idle network resource of a network device.

With reference to the sixth implementation of the second aspect of the embodiments of the present invention, in a seventh implementation of the second aspect of the embodiments of the present invention, the service controller further includes:
a second obtaining unit, configured to obtain the network resource information from the network controller, where the network resource information is used to indicate the idle network resource of the network device; and
a second storage unit, configured to store the network resource information into the network resource information base.

With reference to the fifth implementation of the second aspect of the embodiments of the present invention, in an eighth implementation of the second aspect of the embodiments of the present invention, the processing unit is specifically configured to search a network resource base for a status identifier of the target network resource according to the target network resource information, and the status identifier indicates that the target network resource is currently in the idle state.

With reference to the eighth implementation of the second aspect of the embodiments of the present invention, in a ninth implementation of the second aspect of the embodiments of the present invention, the service controller further includes:
a third obtaining unit, configured to obtain the target network resource information and the status identifier of the target network resource; and
a third storage unit, configured to store the target network resource information and the status identifier of the target network resource into the network resource information base.

With reference to the second aspect of the embodiments of the present invention, the second implementation of the second aspect, the third implementation of the second aspect, the fourth implementation of the second aspect, the fifth implementation of the second aspect, the sixth implementation of the second aspect, the seventh implementation of the second aspect, the eighth implementation of the second aspect, or the ninth implementation of the second aspect, in a tenth implementation of the second aspect of the embodiments of the present invention, before sending, to the network controller, the invoking instruction that carries the network policy, the processing unit is further configured to: generate the network policy, or receive, by using the northbound interface, the network policy sent by a user terminal.

Application of the technical solutions in the present invention brings the following beneficial effects:

A service controller receives, by using a northbound interface, description information sent by an application server, and determines target network resource information according to the description information. The target network resource information is used to indicate a target network resource for implementing an application. In comparison with the prior art, during application development, a developer does not need to develop an application with reference to network resource information, a service controller may automatically match the application with a network resource, and therefore, application development may become less difficult. In addition, the service controller may send, to a network controller, an invoking instruction that carries the network policy, and the network policy does not need to be sent manually, so as to improve application implementation efficiency.

### BRIEF DESCRIPTION OF DRAWINGS

FIG. 1 is a schematic diagram of an SDN network architecture in the prior art;
FIG. 2 is a schematic diagram of an SDN network architecture in an embodiment of the present invention;
FIG. 3 is a schematic flowchart of an application implementation method in an embodiment of the present invention;
FIG. 4 is a schematic flowchart of another application implementation method in an embodiment of the present invention;
FIG. 5 is a schematic structural diagram of a service information model in an embodiment of the present invention;
FIG. 6 is a schematic structural diagram of a service controller in an embodiment of the present invention;
FIG. 7 is a schematic structural diagram of another service controller in an embodiment of the present invention; and
FIG. 8 is a schematic structural diagram of an entity apparatus of a service controller in an embodiment of the present invention.

### DESCRIPTION OF EMBODIMENTS

Embodiments of the present invention provide an application implementation method and a service controller, so as to facilitate application development and improve application implementation efficiency.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

To prevent a developer (a human factor) from affecting matching between a network resource and an application, and to improve an application implementation success rate, the embodiments of the present invention provide a new SND architecture and an application implementation method in the architecture.

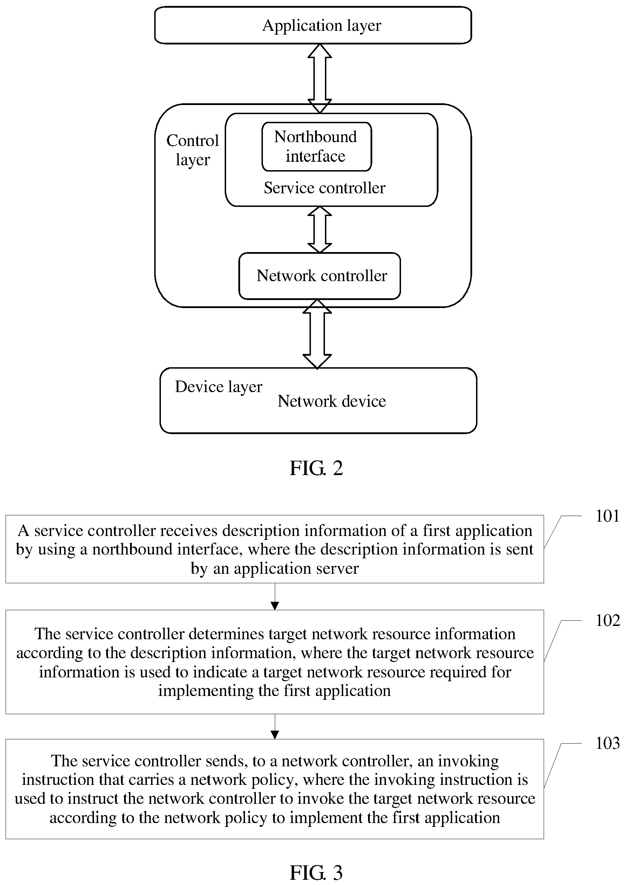

Referring to FIG. 2, FIG. 2 is an SDN architecture diagram provided in the embodiments of the present invention. In the embodiments of the present invention, an original control layer is divided into a service controller and a network controller. The service controller includes a northbound interface, and communicates with an application layer by using the northbound interface. The network controller includes a southbound interface (not shown in the figure). The application implementation method described in the embodiments of the present invention is executed by the service controller.

Referring to FIG. 3, an application implementation method in an embodiment of the present invention includes the following steps.

101. A service controller receives description information of a first application by using a northbound interface, where the description information is sent by an application server.

It may be understood that after an application developer develops the first application, the application server may send the description information of the first application to the service controller by using the northbound interface.

The description information may include one or more types of the following information: an application type, application quality, an application identifier, or the like.

102. The service controller determines target network resource information according to the description information, where the target network resource information is used to indicate a target network resource required for implementing the first application.

It may be understood that a correspondence between description information and network resource information is preset in the service controller, and the service controller may search, by using the correspondence, for the target network resource information corresponding to the description information.

103. The service controller sends, to a network controller, an invoking instruction that carries a network policy, where the invoking instruction is used to instruct the network controller to invoke the target network resource according to the network policy to implement the first application.

It may be understood that after determining the target network resource information and determining, according to the target network resource information, the target network resource for implementing the first application, the service controller may send, to the network controller, the invoking instruction that carries the network policy, and enable the network controller to invoke the target network resource according to the network policy to implement the first application.

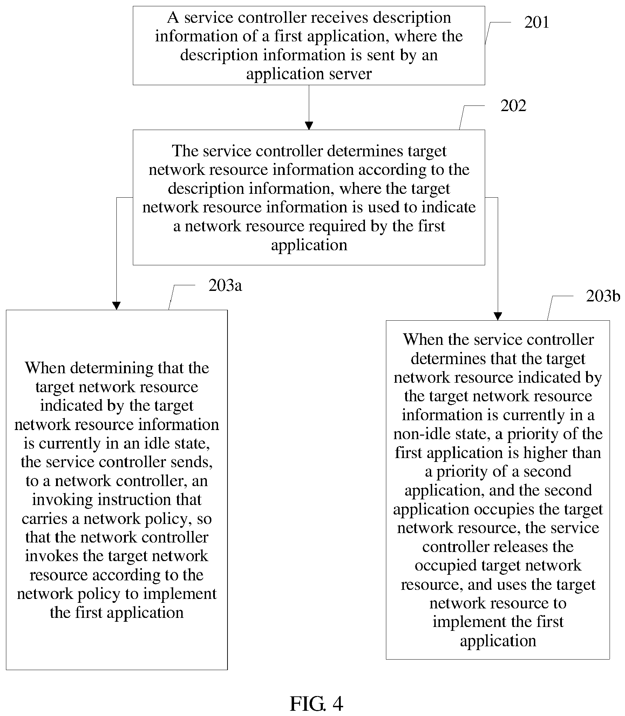

In this embodiment of the present invention, a service controller receives description information sent by an application server, and determines target network resource information according to the description information. The target network resource information is used to indicate a target network resource for implementing an application. Then the service controller sends, to a network controller, an invoking instruction that carries a network policy, so that the network controller invokes the target network resource according to the network policy to implement the application. In comparison with the prior art, during application development, a developer does not need to develop an application with reference to network resource information, and therefore, application development may become less difficult. In addition, the service controller may send, to a network controller by using a northbound interface, an invoking instruction that carries the network policy, and the network policy does not need to be sent manually, so as to improve application implementation efficiency. Based on FIG. 3, the method may be further expanded. As shown in FIG. 4, another application implementation method in an embodiment of the present invention includes the following steps.

201. A service controller receives description information of a first application, where the description information is sent by an application server.

The description information includes at least one type of the following information: an application type, application quality, an application identifier, or the like.

The application identifier may include an application software name, an application IP address, a terminal type, and the like. The application type may include a service type, a play mode, video resolution, and the like. The application quality may include a quality of experience (English: mean opinion score, MOS for short) value and a key quality index (English: key quality index, KQI for short) value. For example, description information of an over-the-top (English: over-the-top, OTT for short) application includes a play mode, an application software name, resolution, and a MOS value. Details are shown in Table 1:

**Table 1**

| | Play mode | Application software name | Resolution | MOS value |
|---|---|---|---|---|
| Description information 1 | Live broadcast | OTT | Standard definition | 4 |
| Description information 1 | On demand | OTT | High definition | 4 |

202. The service controller determines target network resource information according to the description information, where the target network resource information is used to indicate a network resource required by the first application.

It may be understood that a correspondence between description information and network resource information is preset in the service controller, and the service controller may search, by using the correspondence, for the target network resource information corresponding to the description information.

The network resource information may include one or more types of network status information, network topology information, network function information, or network link information. For example, network resource information corresponding to the OTT application is network link information. The network link information is used to indicate a network link required for implementing the OTT application. The network link information includes bandwidth, packet loss, a delay, and jitter, and details may be shown in Table 2:

**Table 2**

| | Bandwidth | Packet loss | Delay | Jitter |
|---|---|---|---|---|
| Network link information 1 | >4 Mbps | <1s | <0.5% | <1% |
| Network link information 2 | >8 Mbps | <5s | <1% | <0.5% |

A correspondence between the description information and the network link information of the OTT application may be preset, and is specifically shown in Table 3:

| | |
|---|---|
| Description information 1 | Network link information 1 |
| Description information 2 | Network link information 2 |

Therefore, when the description information that is of the first application, that is sent by the application server, and that is received by the service controller is the description information 1, it may be determined that the target network resource information corresponding to the description information 1 is the network link information 1.

203. The service controller sends, to a network controller, an invoking instruction that carries a network policy, where the invoking instruction is used to instruct the network controller to invoke the target network resource according to the network policy to implement the first application.

It should be noted that after determining the target network resource information, the service controller first determines whether the target network resource indicated by the target network resource information is in an idle state. If the target network resource is in the idle state, the invoking instruction that carries the network policy is sent to the network controller according to step 203a, so that the network controller invokes the target network resource according to the network policy to implement the first application. If the target network resource is in an occupied state, the invoking instruction that carries the network policy is sent to the network controller according to step 203b, so that the network controller invokes the target network resource according to the network policy to implement the first application.

203a. When determining that the target network resource indicated by the target network resource information is currently in an idle state, the service controller sends, to the network controller, the invoking instruction that carries the network policy, so that the network controller invokes the target network resource according to the network policy to implement the first application.

It may be understood that after determining the target network resource information, if the service controller determines that the target network resource is in the idle state, the service controller sends, to the network controller, the invoking instruction that carries the network policy, and the network controller invokes the target network resource according to the network policy to implement the first application. For example, when the service controller determines that a network link indicated by a network link resource 1 is in an idle state, the service controller sends an invoking instruction to the network controller, so that the network controller invokes the network link to implement the OTT application.

Optionally, in step 203a in this embodiment, at least two manners may be used for the service controller to determine that the target network resource indicated by the target network resource information is currently in the idle state:
1. The service controller determines that network resource information in a network resource information base includes the target network resource information, and the network resource information is used to indicate an idle network resource of a network device.
It may be understood that the network resource base of the service controller stores the network resource information used to indicate the idle network resource of the network device at a bottom layer. Therefore, the service controller may compare the target network resource information with the network resource information in the network resource base. When the service controller determines that the network resource information in the network resource base includes the target network resource information, it indicates that the target network resource indicated by the target network resource information is in the idle state.
Optionally, before the service controller determines that the network resource information in the network resource information base includes the target network resource information, the service controller may establish the network resource information base in advance, obtain the network resource information, and then store the network resource information into the network resource information base.
The service controller may directly obtain the idle network resource of the network device, or may obtain the idle network resource of the network device from the network controller. This is not specifically limited herein.
2. The service controller searches a network resource information base for a status identifier of the target network resource according to the target network resource information, and determines, according to the status identifier, that the target network resource is currently in the idle state.
The status identifier is used to indicate a status of the network resource, and the status includes the occupied state or the idle state.
It may be understood that the network resource base of the service controller stores all network resource information of a network device at a bottom layer and corresponding status identifiers of all network resources. The service controller may search, according to the target network resource information, the network resource information base for the status identifier corresponding to the target network resource. When the status identifier indicates the idle state, it indicates that the target network resource is in the idle state. For example, it may be determined, according to network link information and status identifiers shown in Table 4, that a target network resource of the OTT application is in an idle state.

**Table 4**

| | |
|---|---|
| Network link information 1 | Idle |
| Network link information 2 | Occupied |
| Network link information 3 | Idle |
| Network link information 4 | Occupied |

Optionally, before the service controller searches, according to the target network resource information, the network resource information base for the status identifier of the target network resource, the service controller may establish the network resource information base in advance, obtain all the network resource information of the network device at the bottom layer, record the status identifiers of the network resources, and then store the network resource information and the corresponding status identifiers of the network resources into the network resource information base.

203b. When the service controller determines that the target network resource indicated by the target network resource information is currently in an occupied state, a priority of the first application is higher than a priority of a second application, and the second application occupies the target network resource, the service controller releases the occupied target network resource, and uses the target network resource to implement the first application.

It may be understood that after determining that the target network resource is in the occupied state, the service controller continues to determine whether the priority of the first application is higher than the priority of the second application that occupies the target network resource. If the priority of the first application is higher than the priority of the second application, the target network resource is invoked to implement the first application. If the priority of the first application is not higher than the priority of the second application, a feedback that the application cannot be implemented is provided for an application layer.

Optionally, in this embodiment, a priority may be set according to an application type, and then the service controller may compare the priority of the first application with the priority of the second application according to application types. For example, it may be set that a priority of an OTT application is higher than a priority of an Internet Protocol television (Internet Protocol television, IPTV) application. Therefore, when the first application is an OTT application, and the second application is an IPTV application, it may be determined that the priority of the first application is higher than the priority of the second application.

It should be noted that in actual application, the priority of the first application may be compared with the priority of the second application in another manner, and details are not described herein.

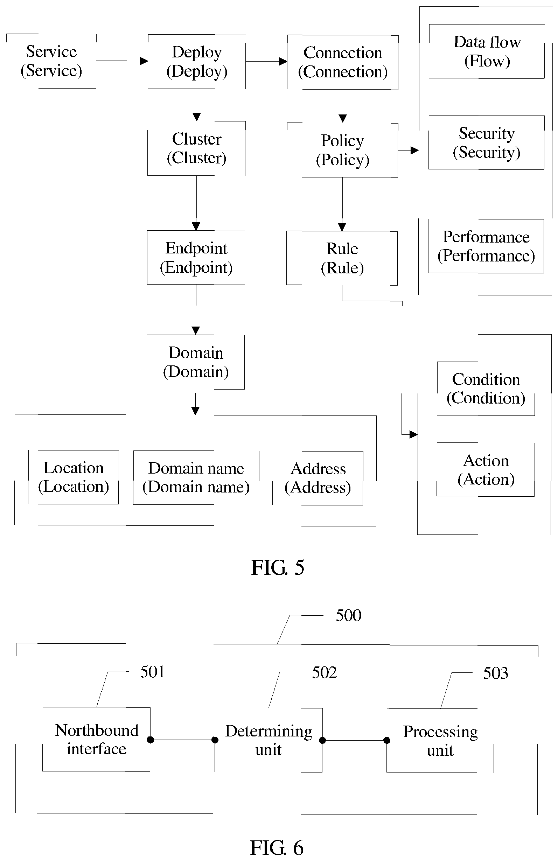

Optionally, in step 203b in this embodiment, at least two manners may be used for the service controller to determine that the target network resource indicated by the target network resource information is currently in the occupied state:
1. The service controller determines that network resource information in a network resource information base does not include the target network resource information, and the network resource information is used to indicate an idle network resource of a network device.
   For a specific implementation process in which the service controller determines that the target network resource is currently in the occupied state, refer to the first manner of determining that the target network resource is in the idle state in step 203a. Different from the first manner, when the service controller determines that the network resource information in the network resource base does not include the target network resource information, it indicates that the target network resource indicated by the target network resource information is in the occupied state.
2. The service controller searches a network resource information base for a status identifier of the target network resource according to the target network resource information, and determines, according to the status identifier, that the target network resource is currently in the occupied state.
   For a specific implementation process in which the service controller determines that the target network resource is currently in the occupied state, refer to the second manner of determining that the target network resource is in the idle state in step 203a. Different from the second manner, when the network status identifier found by the service controller indicates the occupied state, it indicates that the target network resource indicated by the target network resource information is in the occupied state. Optionally, in some embodiments of the present invention, before step 202, the service controller needs to convert a format of the received description information according to a service information model.
   For the service information model, refer to FIG. 5. For example, a format of the received description information of the OTT application is as follows:

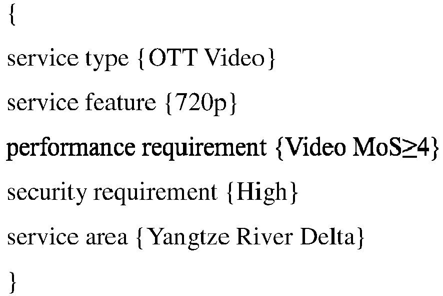

A format obtained by converting the description information of the OTT application according to the service information model in FIG. 5 is as follows:

```
         Service: HTTP Video
         Cluster: {
         Endpoint {
         Location}
          }
         Connection: {
         Flow {
         type: streaming,
         constraint: xxx}
         Security {
         gold}
         Performance {
         type: KQI
         constraint: xxx}
          }
```

Optionally, in some embodiments of the present invention, before step 203, the service controller needs to obtain the network policy.

The service controller may generate the network policy, or may receive the network policy sent by a user terminal.

It should be noted that in actual application, the network policy may be obtained in another manner. This is not specifically limited herein.

The network policy may be application implementation duration. For example, according to a normal timetable of a user, most applications are usually stopped after 11:00 in the evening and most network resources are released at this time. Therefore, the service controller may generate a network policy, to control the network controller to implement the OTT application after 10:00 in the evening. It should be noted that in actual application, the network policy may be application implementation time, resource switching during application implementation, or the like. This is not specifically limited herein.

Application of the technical solution in this embodiment of the present invention brings the following beneficial effects:

When a service controller determines that a target network resource indicated by target network resource information is in an idle state, a controller may invoke the target network resource to implement the first application. This may make full use of idle network resources, and improve resource utilization.

The service controller determines that the target network resource is in the idle state by determining that network resource information in a network resource base includes the target network resource information and by determining, by searching the network resource base, that a status identifier corresponding to the target network resource is the idle state. This may conveniently and quickly determine a status of the target network resource, and improve application implementation efficiency.

When the service controller determines that the target network resource indicated by the target network resource information is in an occupied state, a priority of the first application is higher than a priority of a second application, and the second application occupies the target network resource, the target network resource occupied by the second application is released, and then the target network resource is invoked to implement the first application. Therefore, in a case of insufficient network resources, network resource utilization is maximized.

The foregoing describes the application implementation method in the embodiments of the present invention, and the following describes a service controller in the embodiments of the present invention. Referring to FIG. 6, an embodiment of a service controller 500 in the embodiments of the present invention includes:
a northbound interface 501, configured to receive description information of a first application, wherein the description information is sent by an application server;
a determining unit 502, configured to determine target network resource information according to the description information, where the target network resource information is used to indicate a network resource required by the first application; and
a processing unit 503, configured to send, to a network controller, an invoking instruction that carries a network policy, where the invoking instruction is used to instruct the network controller to invoke the target network resource according to the network policy to implement the first application.

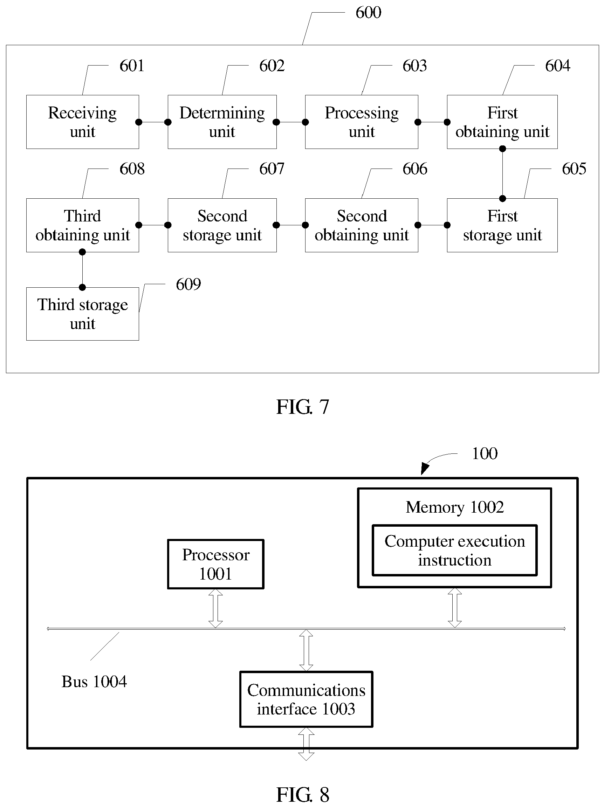

In other embodiments of the present invention, the invoking unit may specifically determine whether a target resource indicated by target resource information is in an idle state, so as to invoke the target network resource to implement the application. Referring to FIG. 7, during implementation of the present invention, another embodiment of a service controller 600 includes:
a northbound interface 601, configured to receive description information of a first application, where the description information is sent by an application server;
a determining unit 602, configured to determine target network resource information according to the description information, where the target network resource information is used to indicate a network resource required by the first application; and
a processing unit 603, configured to send, to a network controller, an invoking instruction that carries a network policy, where the invoking instruction is used to instruct the network controller to invoke the target network resource according to the network policy to implement the first application.

Optionally, in some embodiments of the present invention, that a processing unit 603 sends, to a network controller, an invoking instruction that carries a network policy may be specifically that when determining that the target network resource indicated by the target network resource information is currently in an idle state, the processing unit 603 sends, to the network controller, the invoking instruction that carries the network policy.

Optionally, in some embodiments of the present invention, that the processing unit 603 determines that the target network resource indicated by the target network resource information is currently in an idle state may be specifically that the processing unit 603 determines that network resource information in a network resource information base includes the target network resource information. The network resource information is used to indicate an idle network resource of a network device.

Optionally, in other embodiments of the present invention, that the processing unit 603 determines that the target network resource indicated by the target network resource information is currently in an idle state may be specifically that the processing unit 603 searches, according to the target network resource information, a network resource information base for a status identifier of the target network resource, and determines, according to the status identifier, that the target network resource is currently in the idle state.

Optionally, in other embodiments of the present invention, that the processing unit 603 sends, to a network controller, an invoking instruction that carries a network policy may be specifically that when determining that the target network resource indicated by the target network resource information is currently in an occupied state, a priority of the first application is higher than a priority of a second application, and the second application occupies the target network resource, the processing unit 603 sends, to the network controller, the invoking instruction that carries the network policy.

Optionally, in some embodiments of the present invention, that the processing unit 603 determines that the target network resource indicated by the target network resource information is currently in the occupied state may be specifically that the processing unit 603 determines that network resource information in a network resource information base does not include the target network resource information. The network resource information is used to indicate an idle network resource of a network device.

Optionally, in other embodiments of the present invention, that the processing unit 603 determines that the target network resource indicated by the target network resource information is currently in an occupied state may be specifically that the processing unit 603 searches, according to the target network resource information, a network resource base for a status identifier of the target network resource, and determines, according to the status identifier, that the target network resource is currently in the occupied state.

Optionally, in some embodiments of the present invention, the processing unit 603 is further configured to, before sending, to the network controller, the invoking instruction that carries the network policy, generate the network policy, or receive, by using the northbound interface, the network policy sent by a user terminal. Optionally, in some embodiments of the present invention, the service controller 600 may further include a first obtaining unit 604 and a first storage unit 605.

The first obtaining unit 604 is configured to obtain the network resource information from the network controller, and the network resource information is used to indicate the idle network resource of the network device. The first storage unit 605 is configured to store the network resource information into the network resource information base.

Optionally, in some embodiments of the present invention, the service controller 600 may further include a second obtaining unit 606 and a second storage unit 607.

The second obtaining unit 606 is configured to obtain the network resource information from the network controller, and the network resource information is used to indicate the idle network resource of the network device. The second storage unit 607 is configured to store the network resource information into the network resource information base.

Optionally, in some embodiments of the present invention, the service controller 600 may further include a second obtaining unit 608 and a second storage unit 609.

The third obtaining unit 608 is configured to obtain the target network resource information and the status identifier of the target network resource. The third storage unit 609 is configured to store the target network resource information and the status identifier of the target network resource into the network resource information base.

It may be understood that functions of function modules in the service controller in this embodiment of the present invention may be specifically implemented according to the method in the foregoing method embodiment. For a specific implementation process thereof, refer to related description in the foregoing method embodiments. Details are not described herein again. In this embodiment of the present invention, a service controller receives, by using a northbound interface, description information sent by an application server, and determines, according to the description information by using a determining unit, target network resource information required for implementing an application. In comparison with the prior art, during application development, a developer does not need to develop an application with reference to network resource information, a service controller may automatically match the application with a network resource, and therefore, application development may become less difficult. In addition, the service controller may send, to a network controller by using a processing unit, an invoking instruction that carries a network policy, and the network policy does not need to be sent manually, so as to improve application implementation efficiency.

The foregoing describes the structure of the service controller from a logical perspective, and the following describes a structure of a service controller in an embodiment of the present invention from a physical perspective. The service controller may implement the method provided in the embodiments corresponding to FIG. 3 and FIG. 4. Referring to FIG. 8, an embodiment of the present invention provides a service controller 100.

The service controller 100 may be a computer with a microprocessor. For example, the service controller 100 may be one of devices such as a general-purpose computer, a customized computer, a mobile phone terminal, and a server. The service controller 100 may include a processor 1001, a memory 1002, a communications interface 1003, and a bus 1004. The processor 1001, the memory 1002, and the communications interface 1003 are connected by using the bus 1004 to complete mutual communication. The memory 1002 is configured to store program code. When the service controller 100 runs, the processor 1001 executes the program code stored in the memory 1002, so that the service controller 100 executes the application implementation method recorded in the foregoing method embodiments.

Specifically, the bus 1004 may be an Industry Standard Architecture (English: Industry Standard Architecture, ISA for short) bus, a Peripheral Component Interconnect (English: Peripheral Component, PCI for short) bus, an Extended Industry Standard Architecture (English: Extended Industry Standard Architecture, EISA for short) bus, or the like. The bus may be classified into one or more of an address bus, a data bus, or a control bus. For ease of representation, only one bold line is used in FIG. 8 to represent the bus, but it does not represent that there is only one bus or one type of bus.

The memory 1002 is configured to store executable program code, and the program code includes a computer operation instruction. When the service controller 100 executes the program code, the service controller 100 may complete steps 101 to 103 in the embodiment in FIG. 3, or may implement steps 201 to 203 in the embodiment in FIG. 4.

The processor 1001 may be a central processing unit (English: central processing unit, CPU for short), or the processor 1001 may be an application-specific integrated circuit (English: application-specific integrated circuit, ASIC for short), or the processor 1001 may be one or more integrated circuits configured to implement this embodiment of the present invention.

In the foregoing embodiments, the description of each embodiment has respective focuses. For a part that is not described in detail in an embodiment, refer to related descriptions in other embodiments.

It may be clearly understood by persons of ordinary skill in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

In addition, functional units in the embodiments of the present invention may be integrated into one processing unit, or each of the units may exist alone physically, or two or more units are integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some part of the steps of the methods described in the embodiments of the present invention. The foregoing storage medium includes: any medium that can store program code, such as a USB flash drive, a removable hard disk, a read-only memory (read-only memory, ROM for short), a random access memory (random access memory, RAM for short), a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

Further embodiments of the present invention are provided in the following. It should be noted that the numbering used in the following section does not necessarily need to comply with the numbering used in the previous sections.
Embodiment 1. An application implementation method, comprising:
   receiving, by a service controller, description information of a first application by using a northbound interface, wherein the description information is sent by an application server;
   determining, by the service controller, target network resource information according to the description information, wherein the target network resource information is used to indicate a target network resource required for implementing the first application; and
   sending, by the service controller to a network controller, an invoking instruction that carries a network policy, wherein the invoking instruction is used to instruct the network controller to invoke the target network resource according to the network policy to implement the first application.
Embodiment 2. The method according to Embodiment 1, wherein the sending, by the service controller to a network controller, an invoking instruction that carries a network policy comprises:
   when determining that the target network resource indicated by the target network resource information is currently in an idle state, sending, by the service controller to the network controller, the invoking instruction that carries the network policy.
Embodiment 3. The method according to Embodiment 2, wherein the determining, by the service controller, that the target network resource is currently in an idle state comprises:
   determining, by the service controller, that network resource information in a network resource information base comprises the target network resource information, wherein the network resource information is used to indicate an idle network resource of a network device.
Embodiment 4. The method according to Embodiment 3, before the determining, by the service controller, that the target network resource is currently in an idle state, further comprising:
   obtaining, by the service controller, the network resource information from the network controller, wherein the network resource information is used to indicate the idle network resource of the network device; and
   storing, by the service controller, the network resource information into the network resource information base.
Embodiment 5. The method according to Embodiment 2, wherein the determining, by the service controller, that the target network resource indicated by the target network resource information is currently in an idle state comprises:
   searching, by the service controller, a network resource information base for a status identifier of the target network resource according to the target network resource information, and determining, according to the status identifier, that the target network resource is currently in the idle state.
Embodiment 6. The method according to Embodiment 1, wherein the sending, by the service controller to a network controller, an invoking instruction that carries a network policy comprises:
   when determining that the target network resource indicated by the target network resource information is currently in an occupied state, a priority of the first application is higher than a priority of a second application, and the second application occupies the target network resource, sending, by the service controller to the network controller, the invoking instruction that carries the network policy; and
   that the invoking instruction is used to instruct the network controller to invoke the target network resource according to the network policy to implement the first application comprises:
   the invoking instruction is used to instruct the network controller to, according to the network policy, release the occupied target network resource and invoke the target network resource to implement the first application.
Embodiment 7. The method according to Embodiment 6, wherein the determining, by the service controller, that the target network resource indicated by the target network resource information is currently in an occupied state comprises:
   determining, by the service controller, that network resource information in a network resource information base does not comprise the target network resource information, wherein the network resource information is used to indicate an idle network resource of a network device.
Embodiment 8. The method according to Embodiment 7, before the determining, by the service controller, that the target network resource indicated by the target network resource information is currently in an occupied state, further comprising:
   obtaining, by the service controller, the network resource information from the network controller, wherein the network resource information is used to indicate the idle network resource of the network device; and
   storing, by the service controller, the network resource information into the network resource information base.
Embodiment 9. The method according to Embodiment 6, wherein the determining, by the service controller, that the target network resource is currently in an occupied state comprises:
   searching, by the service controller, a network resource base for a status identifier of the target network resource according to the target network resource information, and determining, according to the status identifier, that the target network resource is currently in the occupied state.
Embodiment 10. The method according to Embodiment 9, before the determining, by the service controller, that the target network resource indicated by the target network resource information is currently in an occupied state, further comprising:
   obtaining, by the service controller, the target network resource information and the status identifier of the target network resource; and
   storing, by the service controller, the target network resource information and the status identifier of the target network resource into the network resource information base.
Embodiment 11. The method according to any one of Embodiments 1 to 10, before the sending, by the service controller to a network controller, an invoking instruction that carries a network policy, further comprising:
   generating, by the service controller, the network policy; or
   receiving, by the service controller by using the northbound interface, the network policy sent by a user terminal.
Embodiment 12. A service controller, comprising:
   a northbound interface, configured to receive description information of a first application, wherein the description information is sent by an application server;
   a determining unit, configured to determine target network resource information according to the description information, wherein the target network resource information is used to indicate a target network resource required for implementing the first application; and
   a processing unit, configured to send, to a network controller, an invoking instruction that carries a network policy, wherein the invoking instruction is used to instruct the network controller to invoke the target network resource according to the network policy to implement the first application.
Embodiment 13. The service controller according to Embodiment 12, wherein the processing unit is specifically configured to: when determining that the target network resource indicated by the target network resource information is currently in an idle state, send, to the network controller, the invoking instruction that carries the network policy.
Embodiment 14. The service controller according to Embodiment 13, wherein the processing unit is specifically configured to determine that network resource information in a network resource information base comprises the target network resource information, and the network resource information is used to indicate an idle network resource of a network device.
Embodiment 15. The service controller according to Embodiment 14, further comprising:
   a first obtaining unit, configured to obtain the network resource information from the network controller, wherein the network resource information is used to indicate the idle network resource of the network device; and
   a first storage unit, configured to store the network resource information into the network resource information base.
Embodiment 16. The service controller according to Embodiment 13, wherein the processing unit is specifically configured to: search a network resource information base for a status identifier of the target network resource according to the target network resource information, and determine, according to the status identifier, that the target network resource is currently in the idle state.
Embodiment 17. The service controller according to Embodiment 12, wherein the processing unit is specifically configured to:
   when determining that the target network resource indicated by the target network resource information is currently in an occupied state, a priority of the first application is higher than a priority of a second application, and the second application occupies the target network resource, send, to the network controller, the invoking instruction that carries the network policy, wherein the invoking instruction is used to instruct the network controller to, according to the network policy, release the occupied target network resource and invoke the target network resource to implement the first application.
Embodiment 18. The service controller according to Embodiment 17, wherein the processing unit is specifically configured to determine that network resource information in a network resource information base does not comprise the target network resource information, wherein the network resource information is used to indicate an idle network resource of a network device.
Embodiment19. The service controller according to Embodiment 18, further comprising:
   a second obtaining unit, configured to obtain the network resource information from the network controller, wherein the network resource information is used to indicate the idle network resource of the network device; and
   a second storage unit, configured to store the network resource information into the network resource information base.
Embodiment 20. The service controller according to Embodiment 17, wherein the processing unit is specifically configured to search a network resource base for a status identifier of the target network resource according to the target network resource information, and the status identifier indicates that the target network resource is currently in the occupied state.
Embodiment 21. The service controller according to Embodiment 20, further comprising:
   a third obtaining unit, configured to obtain the target network resource information and the status identifier of the target network resource; and
   a third storage unit, configured to store the target network resource information and the status identifier of the target network resource into the network resource information base.
Embodiment 22. The service controller according to any one of Embodiments 12 to 21, wherein before sending, to the network controller, the invoking instruction that carries the network policy, the processing unit is further configured to: generate the network policy, or receive, by using the northbound interface, the network policy sent by a user terminal.

## Claims

1. An application implementation method, comprising:
receiving (101; 201), by a service controller (100; 500; 600), description information of a first application by using a northbound interface (501; 601), wherein the description information is sent by an application server;
determining (102; 202), by the service controller (100; 500; 600), target network resource information according to the description information, wherein the target network resource information is used to indicate a target network resource required for implementing the first application; and
sending (103), by the service controller (100; 500; 600) to a network controller, an invoking instruction, wherein the invoking instruction is used to instruct the network controller to invoke the target network resource to implement the first application.

2. The method according to claim 1, wherein the target network resource information comprises network function information.

3. The method according to claim 1, wherein the sending, by the service controller (100; 500; 600) to a network controller, an invoking instruction com prises:
when determining that the target network resource indicated by the target network resource information is currently in an idle state, sending (203a), by the service controller (100; 500; 600) to the network controller, the invoking instruction that carries the network policy.

4. The method according to claim 3, wherein the determining, by the service controller (100; 500; 600), that the target network resource is currently in an idle state comprises:
determining, by the service controller (100; 500; 600), that network resource information in a network resource information base comprises the target network resource information, wherein the network resource information is used to indicate an idle network resource of a network device.

5. The method according to claim 4, before the determining, by the service controller (100; 500; 600), that the target network resource is currently in an idle state, further comprising:
obtaining, by the service controller (100; 500; 600), the network resource information from the network controller, wherein the network resource information is used to indicate the idle network resource of the network device; and
storing, by the service controller (100; 500; 600), the network resource information into the network resource information base.

6. The method according to claim 3, wherein the determining, by the service controller (100; 500; 600), that the target network resource indicated by the target network resource information is currently in an idle state comprises:
searching, by the service controller (100; 500; 600), a network resource information base for a status identifier of the target network resource according to the target network resource information, and determining, according to the status identifier, that the target network resource is currently in the idle state.

7. The method according to claim 1, wherein the sending, by the service controller (100; 500; 600) to a network controller, an invoking instruction com prises:
when determining that the target network resource indicated by the target network resource information is currently in an occupied state, a priority of the first application is higher than a priority of a second application, and the second application occupies the target network resource, sending, by the service controller (100; 500; 600) to the network controller, the invoking instruction; and
that the invoking instruction is used to instruct the network controller to invoke the target network resource to implement the first application comprises:
the invoking instruction is used to instruct the network controller to, according to the network policy, release (203b) the occupied target network resource and invoke the target network resource to implement the first application.

8. The method according to claim 7, wherein the determining, by the service controller (100; 500; 600), that the target network resource indicated by the target network resource information is currently in an occupied state comprises:
determining, by the service controller (100; 500; 600), that network resource information in a network resource information base does not comprise the target network resource information, wherein the network resource information is used to indicate an idle network resource of a network device.

9. The method according to claim 8, before the determining, by the service controller (100; 500; 600), that the target network resource indicated by the target network resource information is currently in an occupied state, further comprising:
obtaining, by the service controller (100; 500; 600), the network resource information from the network controller, wherein the network resource information is used to indicate the idle network resource of the network device; and
storing, by the service controller (100; 500; 600), the network resource information into the network resource information base.

10. The method according to claim 7, wherein the determining, by the service controller (100; 500; 600), that the target network resource is currently in an occupied state comprises:
searching, by the service controller (100; 500; 600), a network resource information base for a status identifier of the target network resource according to the target network resource information, and determining, according to the status identifier, that the target network resource is currently in the occupied state.

11. The method according to claim 10, before the determining, by the service controller (100; 500; 600), that the target network resource indicated by the target network resource information is currently in an occupied state, further comprising:
obtaining, by the service controller (100; 500; 600), the target network resource information and the status identifier of the target network resource; and
storing, by the service controller (100; 500; 600), the target network resource information and the status identifier of the target network resource into the network resource information base.

12. The method according to any one of claims 1 to 11, before the sending, by the service controller (100; 500; 600) to a network controller, an invoking instruction that carries a network policy, further comprising:
generating, by the service controller (100; 500; 600), the network policy; or
receiving, by the service controller (100; 500; 600) by using the northbound interface (501; 601), the network policy sent by a user terminal.

13. A service controller (100; 500; 600), comprising:
a northbound interface (501; 601), configured to receive description information of a first application, wherein the description information is sent by an application server;
a determining unit (502; 602), configured to determine target network resource information according to the description information, wherein the target network resource information is used to indicate a target network resource required for implementing the first application; and
a processing unit (503; 603), configured to send, to a network controller, an invoking instruction that carries a network policy, wherein the invoking instruction is used to instruct the network controller to invoke the target network resource to implement the first application.

14. The method according to claim 13, wherein the target network resource information comprises network function information.

15. The service controller (100; 500; 600) according to claim 13, wherein the processing unit (503; 603) is specifically configured to: when determining that the target network resource indicated by the target network resource information is currently in an idle state, send, to the network controller, the invoking instruction that carries the network policy.
